(19) Europäisches Patentamt / European Patent Office / Office européen des brevets

(11) **EP 4 293 633 B1**

(12) **EUROPEAN PATENT SPECIFICATION**

(45) Date of publication and mention of the grant of the patent:
**19.11.2025   Bulletin 2025/47**

(21) Application number: **22179165.0**

(22) Date of filing: **15.06.2022**

(51) International Patent Classification (IPC):
***G06V 20/56*** *(2022.01)*

(52) Cooperative Patent Classification (CPC):
**G06V 20/56**

(54) **ASSISTED VEHICLE OPERATION BASED ON DYNAMIC OCCUPANCY GRID  MAPS INCLUDING SEMANTIC INFORMATION**

UNTERSTÜTZTES FAHRZEUGVERFAHREN BASIEREND AUF DYNAMISCHEN BELEGUNGS-GITTERKARTEN, DAS SEMANTISCHE INFORMATIONEN EINSCHLIESST

FONCTIONNEMENT DE VÉHICULE ASSISTÉ BASÉ SUR DES CARTES DE RÉSEAU D'OCCUPATION DYNAMIQUES COMPRENANT DES INFORMATIONS SÉMANTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2023   Bulletin 2023/51**

(73) Proprietor: **Baselabs GmbH
09126 Chemnitz (DE)**

(72) Inventors:
• **Haber, René
  09126 Chemnitz (DE)**
• **Mattern, Norman
  09126 Chemnitz (DE)**
• **Mente, Carsten
  09126 Chemnitz (DE)**
• **Preis, Kevin
  09126 Chemnitz (DE)**

(74) Representative: **Betten & Resch
Patent- und Rechtsanwälte PartGmbB
Maximiliansplatz 14
80333 München (DE)**

(56) References cited:
**US-A1- 2021 334 556     US-A1- 2021 334 556**

• **VATAVU ANDREI ET AL:** "From Particles to Self-Localizing Tracklets: A Multilayer Particle Filter-Based Estimation for Dynamic Grid Maps", IEEE INTELLIGENT TRANSPORTATION SYSTEMS MAGAZINE, IEEE, USA, vol. 12, no. 4, 1 January 2020 (2020-01-01), pages 149 - 168, XP011816759, ISSN: 1939-1390, [retrieved on 20201024], DOI: 10.1109/MITS.2020.3014428
• **ERKENT OZGUR ET AL:** "Semantic Grid Estimation with Occupancy Grids and Semantic Segmentation Networks", 2018 15TH INTERNATIONAL CONFERENCE ON CONTROL, AUTOMATION, ROBOTICS AND VISION (ICARCV), IEEE, 18 November 2018 (2018-11-18), pages 1051 - 1056, XP033480744, [retrieved on 20181218], DOI: 10.1109/ICARCV.2018.8581180
• **DANESCU RADU ET AL:** "PartID - Individual Objects Tracking in Occupancy Grids Using Particle Identities", 2020 IEEE 16TH INTERNATIONAL CONFERENCE ON INTELLIGENT COMPUTER COMMUNICATION AND PROCESSING (ICCP), IEEE, 3 September 2020 (2020-09-03), pages 283 - 290, XP033865341, [retrieved on 20201120], DOI: 10.1109/ICCP51029.2020.9266247

**Description**

TECHNICAL FIELD

System and method for assisting in the operation of a vehicle based on a categorized environment model.

BACKGROUND

The data processing in an automated vehicle typically consists of the stages 1) sensing of the environment, 2) planning of actions and 3) performing those actions. This is also referred to as the Sense-Plan-Act methodology in robotics. The vehicle which shall conduct automated driving tasks is referred to as host vehicle. The automated driving actions are referred to as maneuvers. To enable planning of maneuvers, a model of the environment of the host vehicle, the environment model, is required. Planning considers the location and extension of remote objects, dynamic states of remote objects and information about free space or traversable area to plan maneuvers. Those maneuvers shall be free of collisions and compliant with traffic rules.

The purpose of the environmental model is to combine, unify and filter measurements of one or more exteroceptive and interoceptive sensors and to provide this unified and consolidated data to the planning. The main tasks of an environmental model are temporal synchronization, consideration of different fields-of-view of separate sensors, consideration of the different measurement principles of different sensor modalities such as radar, lidar, camera, or ultrasonic sensors, and weighing of different noise characteristics of different sensors.

Dynamic Grid algorithms, also referred to as Dynamic Occupancy Grid Mapping (DOGMa), are one approach for environmental models. Grid-based algorithms discretize the two-dimensional ground plane of the world into a two-dimensional grid. This grid consists of grid cells. For each grid cell, the probabilities that the area modeled by the cell is 'occupied' by one point-object or that the cell is 'free' is estimated. Besides an estimate of the probability of being 'occupied' or 'free', a state 'unknown' is modeled too. The unknown state is used to model areas which cannot be observed by sensors. The 'occupied' state of grid cells represents an object being inside the area of the cell. The 'free' state of grid cells represents traversable area. Planning can be based on this information. The existing explicitly 'unknown' state of grid cells can also be considered by the planning. As an example, the planning could avoid trajectories which come too close to those areas, as unknown areas could hide objects with trajectories which may lead to unavoidable collisions. As an extension to well-known static occupancy grids (e.g., DE102013223803A1), Dynamic Grid algorithms also estimate the two-dimensional velocity of the point objects modeled by the grid cells.

Typically, the planning stage of an automated vehicle does work on parametric descriptions of objects and free space, such as approximation by bounding boxes for objects and free space polygons. This parametric description is not directly available from the set of grid cells. Therefore, those parametric object and free space information are typically extracted from the grid by algorithms, which cluster the set of grid cells according to some criteria, such as same magnitude and directions of the velocity of a group of grid cells. Planning algorithms, which work directly on the grid representation of a Dynamic Occupancy Grid do also exist.

However, for a more precise planning of maneuvers, it is also required that the planning does not only have information about the existence and dynamic state of objects and free space in the surrounding of the host vehicle, but also the about the semantics. For the objects, the category may lead to different maneuver decisions when assessing hazards in the predicted future. As an example, a pedestrian may move randomly with a high degree of freedom in the change of its direction, whereas sudden lateral movement of cars is very unlikely. The category of the grid cells may also be used in consumers of information about free space. An example is the identification of parking spots marked by markings and to plan a trajectory to park the vehicle inside the marked parking spot.

The state-of-the-art in environmental models for automated driving are based on Kalman filters for the tracking of multiple objects ("multiple object tracking") in combination with static occupancy grids. Both algorithms are executed in parallel, however, due to different model assumptions and therefore different model violations by the real world, the results of both algorithms are conflicting in the general case. Neither does Kalman filter based tracking consider free space information, nor do static occupancy grids model the dynamics of moving targets. However, there are models regarding the fusion of static occupancy grids with semantic information, for example in document D. Nuss, M. Thom, A. Danzer and K. Dietmayer, "Fusion of laser and monocular camera data in object grid maps for vehicle environment perception," 17th International Conference on Information Fusion (FUSION), 2014, pp. 1-8.

In contrast to this classical combination, the Dynamic Grid algorithms solve the problem of object tracking and free space estimation in a consistent and integrated way. However, so far Dynamic Grids algorithms do not offer an integrated processing of semantic information, which is needed as an input for a planning stage of automated vehicles.

The underlying problem of the present invention can therefore be regarded as how to make automated driving maneuvers of a vehicle safer and more reliable.

In accordance with the invention, said problem is solved by a method according to claim 1, a system according to claim 11, a vehicle as claimed in claim 12 and a non-transitory computer readable medium as claimed in claim 13.

US 2021/334556 A1 discloses an electronic device for determining a semantic grid of an environment of a vehicle.

VATAVU ANDREI ET AL, "From Particles to Self-Localizing Tracklets: A Multilayer Particle Filter-Based Estimation for Dynamic Grid Maps", IEEE INTELLIGENT TRANSPORTATION SYSTEMS MAGAZINE, IEEE, USA, vol. 12, no. 4, doi:10.1109/MITS.2020.3014428, ISSN 1939-1390, (20200101) discloses a particle filter (PF)-based grid map.

DANESCU RADU ET AL: "PartID - Individual Objects Tracking in Occupancy Grids Using Particle Identities", 2020 IEEE 16TH INTERNATIONAL CONFERENCE ON INTELLIGENT COMPUTER COMMUNICATION AND PROCESSING (ICCP), IEEE, 3 September 2020, pages 283-290 discloses an approach for individual objects tracking using dynamic occupancy grids, which will embed the identity of the objects in the grid state.

## SUMMARY

The invention is defined in the independent claims. The dependent claims define embodiments of the invention.

A summary of various aspects of the present disclosure is hereinafter presented to provide a basic understanding of these aspects and their associated advantages. Further aspects and technical details are covered in the subsequent chapter entitled "detailed description".

The present disclosure is directed to provide a method to build up a categorized environment model from semantic sensor measurements, which is used in the planning stage of automated vehicle operation.

According to one aspect, a computer-implemented method of assisting in the operation of a vehicle, comprises the steps of: with at least one sensor, sensing an environment of the vehicle thereby obtaining sensor data, and deriving spatial information of the environment and semantic information from the sensor data. Furthermore, generating a dynamic occupancy grid model, in which the sensed environment is represented as a grid consisting of a plurality of grid cells, the grid cells comprising occupying information and a dynamic state represented by a set of particles, and assigning the grid cells and the particles semantic information derived from the sensor data, wherein the semantic information is represented by a set of categories. The method further comprising the steps of predicting new particle positions on the grid; determining for the grid cells predicted semantic information based on combining the semantic information assigned to the grid cells with the semantic information assigned to the particles based on their predicted new particle positions; obtaining new sensor data, and updating the predicted semantic information assigned to the grid cells and the semantic information assigned to the particles from the new sensor data, and deriving an automated driving action based on the determined new semantic information and the dynamic state of the one or more grid cells.

This approach allows semantic information about the environment to be incorporated into the decision-making process for a maneuver, leading to safer and more reliable operation of the vehicle. Furthermore, the method has low computational complexity and therefore yields a dynamic occupancy grid, which is still real time capable. Additionally, semantic information is consistent with other information in the dynamic occupancy grid because semantic information is predicted in the same way as the dynamic information is, that is via the particles, and the transfer of semantic information between grid cells and particles is based on occupancy information.

In another aspect, the updating may be performed via Bayes inference.

In another aspect, the method may also comprise the steps of resampling the dynamic occupancy grid model and generating new particles. Thereby a higher accuracy of the model is achieved.

In another aspect, the categories may include free-space categories and occupying categories, wherein moving object categories are a subset of the occupying categories. This classification of semantic information permits flexibility for adding or removing subcategories, depending on the computational power available and the required level of detail within the environmental model.

In another aspect, the semantic information assigned to the grid cells can be assigned by storing two lists for each grid cell: a first list including occupying cell classifications; and a second list including free-cell classifications.

In another aspect, the semantic information assigned to the particles can be assigned by storing for each particle one list including particle classifications.

In another aspect, determining the predicted semantic information may comprise, for each grid cell being occupied by particles, summing the corresponding occupying cell classification of the grid cell with a weighted sum over the particle classifications of the particles occupying the grid cell. This allows for effectively transferring semantic information between grid cells and particles based on the occupancy information stored in the grid cells.

In another aspect, the occupying cell classifications may describe a probability of a category linked to the grid cell given that the grid cell is occupied, and the free-cell classifications may describe a probability of a category linked to the grid cell given that the grid cell is free-space.

In another aspect, the particle classifications may describe a probability of a category linked to the particle given that the particle is of a moving object category.

According to another aspect, the automated driving action may comprise at least one of a steering action, a lane changing action, a deceleration action, and/or an acceleration action.

According to another aspect, a system for assisting in the operation of a vehicle, comprises: at least one sensor sensing an environment of the vehicle thereby obtaining sensor data, and a control system comprising one or more processors operatively connected to the sensor. The one or more processors are configured to perform steps comprising: deriving spatial information of the environment and semantic information from the sensor data; generating a dynamic occupancy grid model, in which the sensed environment is represented as a grid consisting of a plurality of grid cells the grid cells comprising occupying information and a dynamic state represented by a set of particles; and assigning the grid cells and the particles semantic information derived from the sensor data, wherein the semantic information is represented by a set of categories. The steps further comprising predicting new particle positions on the grid; determining for the grid cells predicted semantic information based on combining the semantic information assigned to the grid cells with the semantic information assigned to the particles based on their predicted new particle positions; obtaining new sensor data; and updating the predicted semantic information assigned to the grid cells and the semantic information assigned to the particles from the new sensor data, and deriving an automated driving action based on the updated predicted semantic information and a new dynamic state of the one or more grid cells.

According to another aspect, a self-driving vehicle comprises the aforementioned system.

According to another aspect, a non-transitory computer readable medium stores instructions that, when executed by one or more processors of a control system of a self-driving vehicle, cause the one or more processors to perform the steps of one of the aforementioned methods.

BRIEF DESCRIPTION OF THE DRAWINGS

The foregoing summary and the following detailed description of preferred embodiments will be more readily understood if read in conjunction with the accompanying drawings. To illustrate the invention, the drawings show exemplary details of the embodiments described. The information shown in the drawing is exemplary and explanatory only and does not limit the claimed invention.

The present invention is described in detail below with reference to the accompanying drawings:

Figure 1 shows the steps of the method, specified by the invention, for updating semantic information stored in dynamic occupancy grids from new semantic sensor measurements.

Figure 2 shows a flow diagram of one embodiment of the method for updating semantic information stored in a dynamic occupancy grid from new semantic sensor measurements.

Figure 3 shows example grids with semantic information after the prediction and the update step.

Figures 4a to FIG. 4c show an exemplary scene at a synthetic parking lot.

DETAILED DESCRIPTION

The invention provides a method to build up a categorized environment model from semantic sensor measurements. The environment model is a dynamic occupancy grid which is real time capable and has consistency between stored semantic information, occupancy information and dynamic information. This is achieved by the combination of linking dynamic information to grid cells with linking dynamic information to particles and transferring semantic information between grid cells and particles based on the occupancy information stored in the grid cells.

Semantic information is represented by a fixed, finite set of distinct categories C together with the likelihood for each category $P(C_i)$ with $C_i \in C$. The set of all categories C gets divided into two non-overlapping subsets F and $0$, which consist of free-space, including but not limited to road and parking space, and occupying categories, including but not limited to car and building, respectively. The subsets F and $O$ satisfy the condition $F \cap O = \emptyset$. For each grid cell two lists of conditional probabilities $P(C_i|F)$ and $P(C_i|O)$ are stored, which denote the likelihood of the category $C_i$ given that the cell contains free space or is occupied respectively. From $F \cap O = \emptyset$ follows that $P(C_i|F) = 0$ if $C_i \in O$ and $P(C_i|O) = 0$ if $C_i \in F$, since each category $C_i$ can only be a member of one of those two subsets. $P(C_i|F)$ and $P(C_i|O)$ are called free cell classification and occupying cell classification respectively in the following. Additionally, each particle stores a list of conditional probabilities $P(C_i|D)$, which is called particle classification in the following, where $D \subset O$ is the set of potentially moving categories, including but not limited to cars and motorcycles. The purpose of particle classifications is the transport of semantic information between grid cells according to the dynamic properties represented by the particles.

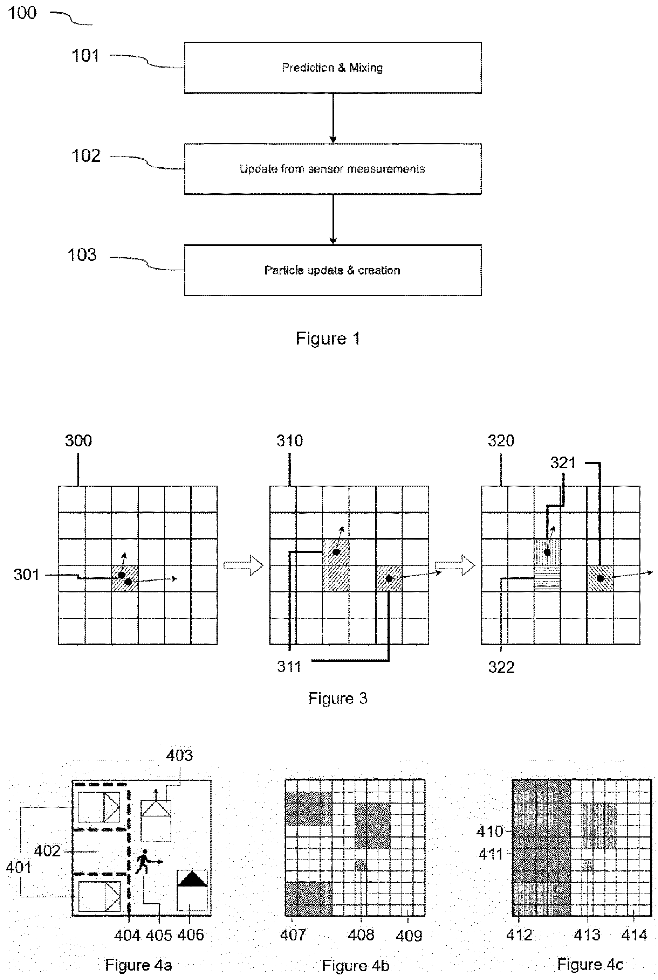

The invention specifies the following algorithm for updating semantic information stored in dynamic occupancy grids from new semantic sensor measurements. The algorithm consists of three distinct steps as shown in Figure 1.

In the first step (101), particles are predicted as specified by the dynamic occupancy grid model. This may be done e.g. by using a constant velocity motion model with some additional noise. During the particle prediction, particle classifications remain unchanged. Furthermore, the state of the underlying dynamic occupancy grid model is predicted as well. After that the occupying cell classification, for each grid cell, is predicted by mixing it with the particle classifications of all particles residing in the cell according to

$$P_M(C_i|O) = \left( P(C_i|O)w + \sum_{j=0}^{n_p-1} w_j P(C_i^j|D) \right) \frac{1}{\gamma},$$

where $P(C_i|O)$ $P\left(C_i^j\middle|D\right)$ are the likelihoods of the i-th category linked to the grid cell given an occupied cell and linked to the j-the particle given a moving object in that cell respectively before mixing and $P_M(C_i|O)$ is the normalized mixed likelihood of the i-th category given an occupied cell. Furthermore, $n_p$ is the number of particles in the the grid cell, w is the weight of the cell classification, $w_j$ the weight of j-th particle and $\gamma = w + \sum_{j=0}^{n_p-1} w_j$ the normalization constant. The cell and particles weights are determined by the underlying dynamic occupancy grid model. The cell weight might for example be chosen to be the probability of the cell being non-dynamically occupied whereas the sum of the particles weights might for example be equal to the probability of the cell being dynamically occupied. Furthermore, both the free cell classification and the mixed occupying cell classification take information loss over time into account according to

$$P'(C_i|F) = d(P(C_i|F), \Delta t),$$

$$P'(C_i|O) = d(P_M(C_i|O), \Delta t),$$

where $P'(C_i|F)$ $P'(C_i|O)$ are the predicted free cell classification and the predicted occupying cell classification respectively. The function $d(\cdot,\cdot)$ describes information loss over time and keeps the classifications normalized. The choice of $d(\cdot,\cdot)$ depends on the underlying dynamic occupancy grid.

In the subsequent step (102), the underlying dynamic occupancy grid and the predicted cell classifications are updated from semantic sensor measurements. The cell classification update might be performed by any algorithm that updates a probability distribution given some new evidence (the semantic measurement). Assuming that a semantic sensor measurement provides a single category measurement the update might e.g. be performed by Bayesian inference. Depending if a measured category is free-space or occupying only the respective cell classifications get updated. For example assuming a semantic sensor measurement Z that corresponds to the occupying category $C_i \in O$, the update might be performed given

$$P''(C_i|O) = \frac{B}{\kappa} P'(C_i|O),$$

$$P''(C_j|O) = \frac{1}{\kappa} P'(C_j|O) \quad \forall C_j \in O, C_j \neq C_i,$$

$$\kappa = 1 + P'(C_i|O)(B-1),$$

where $\kappa$ is a normalization constant and $B$ is a factor that determines the influence of the measurement, where $B \geq 1$. This factor may include effects like sensor measurement errors, model violations (e.g. flat world violations) and so on. For example, the projection of a point from an image of a monocular semantic camera gets worse as the angle between the surface and the ray from the camera to the measurement gets smaller. This means that small errors in the camera image propagate to larger errors in the flat world projection. This may be modeled by $B = \max\left(B_0 \frac{\alpha}{\frac{\pi}{2}}, 1\right)$ with

$$\alpha = arctan\left(\frac{z}{r}\right)$$ , where $z$ is the height of the camera, $r$ is the distance between the camera and the measurement in the xy-plane and $B_0$ is a factor that may depend on the measured category.

Finally (103), if a measured category $Z$ is potentially movable, which means $Z \in D$, all particle classifications in that cell get updated as well. This should be done by the same algorithm as chosen for updating the cell classifications (102), to keep consistency within the algorithm. During the resampling step of the underlying dynamic occupancy grid model new particles may be created. The particle classifications of newly created particles are drawn from the updated occupying cell classifications via

$$P(C_i^j|D) = \eta_i P''(C_i|O),$$

$$\eta_i = \begin{cases} \eta, & C_i \in D \\ 0, & C_i \notin D, \end{cases}$$

$$\eta = \left(\sum_{C_i \in D} P''(C_i|O)\right)^{-1}$$

where $P(C_i^j|D)$ is the particle classification of the j-th newly created particle and $\eta_i$ is a numerical factor which is chosen in a way that only potentially movable categories $C_i \in D$ can have a non-zero probability and that the resulting distribution is normalized.

After the last updating step, to obtain the final likelihood of a category $P(C_i)$ the free cell classification and the occupying cell classification are combined, including uncertainty, using

$$P(C_i) = P(C_i|F)''P(F) + P(C_i|O)''P(O) + \frac{1}{N_C}P(U),$$

where $N_C = |C|$ is the number of distinct categories, $P(F)$, $P(O)$, $P(U)$ are the probabilities of the cell being free, occupied or having unknown occupation, with $P(U) = 1 - P(O) - P(F)$. The values of those probabilities are known from the underlying dynamic occupancy grid. If the underlying dynamic occupancy grid provides for example the values for free $m(F)$, passable $m(FD)$, dynamically occupied $m(D)$, statically occupied $m(S)$ and unknown occupation $m(SD)$, the probabilities for being free or occupied may be calculated by $P(F) = m(F) + m(FD)$ and $P(O) = m(S) + m(D) + m(SD)$ respectively. Other distributions are also possible.

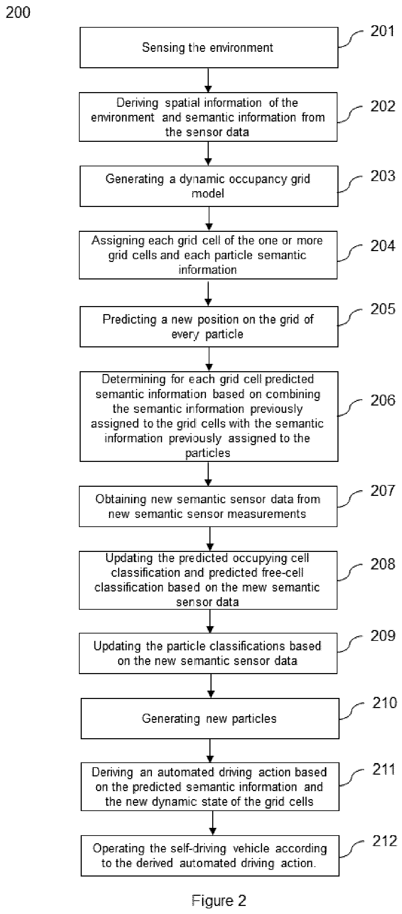

Figure 2 shows one embodiment of the method of updating semantic information stored in a dynamic occupancy grid from new semantic sensor measurements.

The method comprises the following steps:
Sensing (201) with at least one sensor the environment of the vehicle thereby obtaining sensor data. The sensor may be, for example, a laser range sensor, a camera, a lidar, a radar, or a sonar.

Deriving (202) spatial information of the environment and semantic information from the sensor data. For example, semantic information is derived from video images based on scene labeling algorithms. Artificial neural networks can be used to estimate class memberships for all objects or characteristics like road markings in the scenery in front or around the vehicle. The scene labeling algorithm is trained to distinguish between the target classes or categories $F$ and $O$, wherein $F$ represents the free-space classes (characteristics of the environment like road markings, which do not represent an obstacle for the vehicle) and $O$ the occupying classes (objects in the environment of the vehicle, which represent an obstacle for the vehicle). The occupying classes $O$ comprise objects of the category $D$, which are objects of a potentially moving category like cars, pedestrians or motorcycles.

Generating (203) a dynamic occupancy grid model, in which the sensed environment is represented as a grid consisting of a plurality of grid cells, the grid cells comprising occupying information and a dynamic state represented by a set of particles. The particles represent velocity and position of an occupancy in a grid cell. The underlying dynamic occupancy grid model used is not restricted to a specific type of occupancy grid model, however, it has to be particle-based.

Assigning (204) the grid cells and the particles semantic information derived from the sensor data, wherein the semantic information is represented by a set of categories. This is done based on the free-cell classifications, the occupying cell classifications and the particle classifications as previously described in this chapter.

Predicting (205) new particle positions on the grid. This is performed on the basis of the underlying dynamic occupancy grid model used. In essence, all particles that are predicted into a certain grid cell represent the predicted dynamic state of the grid cell. Intuitively, the higher the number of particles or particle weights predicted into a grid cell, the higher is the predicted occupancy probability. During this prediction step the particle classifications remain unchanged (the semantic information that is assigned to the particles).

Determining (206) for the grid cells predicted semantic information based on combining the semantic information assigned to the grid cells with the semantic information assigned to the particles based on their predicted new particle positions. For each grid cell, the occupying cell classification is predicted by mixing or combining it with the particle classifications of all particles predicted to reside in the cell.

Obtaining (207) new sensor data from new sensor measurements.

Updating (208) the predicted semantic information assigned to the grid cells and updating (209) the semantic information assigned to the particles from the new sensor data. The underlying dynamic occupancy grid and the predicted cell classifications are updated from the new sensor data. The cell classification update might be performed by any algorithm that updates a probability distribution given some new evidence (the semantic measurement).

Generating (210) new particles and resampling. Resampling may be applied to avoid degeneration. The resampling step chooses to eliminate some particles and reproduce others instead. New particles are created, if required, according to the particle creation mechanism of the underlying dynamic occupancy grid. The particle classifications of newly created particles are derived from the occupying cell classifications.

Deriving (211) an automated driving action based on the updated semantic information and a new dynamic state of the grid cells. The automated driving action comprises at least one of a steering action, a lane changing action, a deceleration action, and/or an acceleration action.

Assisting (212) the operation of the vehicle according to the derived automated driving action. Depending on the degree of driving automation, assisting means either that a system will support the driver in performing the maneuvers, or the vehicle will take complete control of the driving and perform the planned maneuvers itself.

Figure 3 shows example grids with semantic information after the prediction and the update step. The original grid (300), the grid after prediction (310) and the grid after update (320) are shown. The grid cell (301) contains semantic information and two particles. Arrows denote the velocity, i.e. the dynamic properties, of the particles. After prediction, semantic information is distributed by the particles (311). After the update, the semantic information in the original cell (322) as well as the cells containing the particles (321) is modified.

Figure 4a shows an exemplary scene at a synthetic parking lot. Three parking spots are marked by road markings (404). Two of the three parking spots are occupied by static cars (401). One parking spot is free (402). An automated driving function in a host vehicle (406) could use the information to steer the host vehicle (406) into the parking spot (402). One dynamic and remote vehicle (403) is moving forward. A pedestrian (405) is crossing in front of the host vehicle (406).

Figure 4b shows an example of the corresponding occupancy information of the dynamic semantic grid. Cells (407) denote 'statically occupied' cells, cells (408) denote 'dynamic occupied' cells, and cells (409) denote 'free' cells.

Figure 4c shows an example of the corresponding semantic information of the dynamic semantic grid. (410) denotes a category 'road marking', (411) denotes a category 'parking space', (412) denotes a category 'car', (413) denotes a category 'pedestrian', and (414) denotes a category 'road'.

**Claims**

1. A computer-implemented method of assisting in the operation of a vehicle, the method comprising the steps of:

   with at least one sensor, sensing (201) an environment of the vehicle thereby obtaining sensor data;
   deriving (202) spatial information of the environment and semantic information from the sensor data;
   generating (203) a dynamic occupancy grid model, in which the sensed environment is represented as a grid consisting of a plurality of grid cells, the grid cells comprising occupying information and a dynamic state represented by a set of particles;
   assigning (204) the grid cells and the particles semantic information derived from the sensor data, wherein the semantic information is represented by a set of categories, wherein the categories include free-space categories and occupying categories as well as moving object categories as a subset of the occupying categories, wherein the semantic information is assigned to the particles by storing for each particle a particle classification comprising conditional probabilities, wherein each conditional probability describes a probability of a category linked to the particle given that the particle is of the moving object categories;
   predicting (205) new particle positions on the grid;
   determining (206) for the grid cells predicted semantic information based on combining the semantic information assigned to the grid cells with the semantic information assigned to the particles based on their predicted new particle positions, wherein determining the predicted semantic information comprises, for each grid cell being occupied by particles, calculating a predicted occupying cell classification of the grid cell, the calculation comprising a sum of a corresponding occupying cell classification of the grid cell, wherein the occupying cell classification comprises conditional probabilities, each describing a probability of a category linked to the grid cell given that the grid cell is occupied, with a weighted sum over the particle classifications of the particles occupying the grid cell;

obtaining (207) new sensor data;

updating (208) the predicted semantic information assigned to the grid cells and the semantic information assigned to the particles from the new sensor data;

deriving (211) an automated driving action based on the updated semantic information and a new dynamic state of the grid cells.

2. The method of claim 1, wherein the updating is performed via Bayes inference.

3. The method of claims 1 or 2, further comprising the steps of:

resampling the dynamic occupancy grid model; and
generating new particles.

4. The method of any one of the previous claims, wherein the semantic information assigned to the grid cells is assigned by storing an occupying cell classification and a free-cell classification for each grid cell.

5. The method of one of claims 1 to 4, wherein the occupying cell classification comprises conditional probabilities, each describing a probability of a category linked to the grid cell given that the grid cell is occupied, and the free-cell classification comprises conditional probabilities, each describing a probability of a category linked to the grid cell given that the grid cell is free-space.

6. The method of any one of claims 1 to 5, wherein the automated driving action comprises at least one of a steering action, a lane changing action, a deceleration action, and/or an acceleration action.

7. A system for assisting in the operation of a vehicle, comprising:

at least one sensor sensing an environment of the vehicle thereby obtaining sensor data;
a control system comprising one or more processors operatively connected to the sensor, the one or more processors configured to perform the steps comprising:

deriving (202) spatial information of the environment and semantic information from the sensor data;
generating (203) a dynamic occupancy grid model, in which the sensed environment is represented as a grid consisting of a plurality of grid cells the grid cells comprising occupying information and a dynamic state represented by a set of particles;
assigning (204) the grid cells and the particles semantic information derived from the sensor data, wherein the semantic information is represented by a set of categories, wherein the categories include free-space categories and occupying categories as well as moving object categories as a subset of the occupying categories, wherein the semantic information is assigned to the particles by storing for each particle a particle classification comprising conditional probabilities, wherein each conditional probability describes a probability of a category linked to the particle given that the particle is of the moving object categories;
predicting (205) new particle positions on the grid;
determining (206) for the grid cells predicted semantic information based on combining the semantic information assigned to the grid cells with the semantic information assigned to the particles based on their predicted new particle positions, wherein determining the predicted semantic information comprises, for each grid cell being occupied by particles, calculating a predicted occupying cell classification of the grid cell, the calculation comprising a sum of a corresponding occupying cell classification of the grid cell, wherein the occupying cell classification comprises conditional probabilities, each describing a probability of a category linked to the grid cell given that the grid cell is occupied, with a weighted sum over the particle classifications of the particles occupying the grid cell;
obtaining (207) new sensor data;
updating (208) the predicted semantic information assigned to the grid cells and the semantic information assigned to the particles from the new sensor data;
deriving (211) an automated driving action based on the updated predicted semantic information and a new dynamic state of the one or more grid cells.

8. A vehicle comprising the system of claim 7.

9. A non-transitory computer readable medium storing instructions that, when executed by one or more processors of a control system of a vehicle, cause the one or more processors to perform the steps of claim 1.

10. The non-transitory computer readable medium of claim 9, wherein the automated driving action comprises at least one of a steering action, a lane changing action, a deceleration action, and/or an acceleration action.

**Patentansprüche**

1. Computerimplementiertes Verfahren zur Unterstützung des Betriebs eines Fahrzeugs, wobei das Verfahren die folgenden Schritte umfasst:

   Erfassen (201) der Umgebung des Fahrzeugs mit mindestens einem Sensor, um dadurch Sensordaten zu erhalten;
   Ableiten (202) von räumlichen Informationen über die Umgebung und von semantischen Informationen aus den Sensordaten;
   Erzeugen (203) eines dynamischen Belegungsgittermodells, in dem die erfasste Umgebung als ein Gitter dargestellt wird, das aus einer Mehrzahl von Gitterzellen besteht, wobei die Gitterzellen Belegungsinformationen und einen dynamischen Zustand umfassen, der durch eine Menge von Partikeln dargestellt wird;
   Zuweisen (204) semantischer Informationen, die aus den Sensordaten abgeleitet wurden, zu den Gitterzellen und den Partikeln, wobei die semantischen Informationen durch eine Menge von Kategorien dargestellt werden, wobei die Kategorien Freiraumkategorien und Belegtkategorien sowie bewegliche Objektkategorien als Teilmenge der Belegtkategorien umfassen, wobei die semantischen Informationen den Partikeln zugewiesen werden, indem für jedes Partikel eine Partikelklassifizierung gespeichert wird, die bedingte Wahrscheinlichkeiten umfasst, wobei jede bedingte Wahrscheinlichkeit eine Wahrscheinlichkeit einer mit dem Partikel verknüpften Kategorie beschreibt, vorausgesetzt, dass das Partikel zu den beweglichen Objektkategorien gehört;
   Vorhersagen (205) neuer Partikelpositionen auf dem Gitter;
   Bestimmen (206) vorhergesagter semantischer Informationen für die Gitterzellen basierend auf einem Kombinieren der den Gitterzellen zugewiesenen semantischen Informationen mit den den Partikeln zugewiesenen semantischen Informationen basierend auf ihren vorhergesagten neuen Partikelpositionen, wobei das Bestimmen der vorhergesagten semantischen Informationen für jede von Partikeln besetzte Gitterzelle das Berechnen einer vorhergesagten Belegtzellenklassifizierung der Gitterzelle umfasst, wobei die Berechnung eine Summe einer entsprechenden Belegtzellenklassifizierung der Gitterzelle umfasst, wobei die Belegtzellenklassifizierung bedingte Wahrscheinlichkeiten umfasst, die jeweils eine Wahrscheinlichkeit einer mit der Gitterzelle verknüpften Kategorie beschreiben, vorausgesetzt, dass die Gitterzelle besetzt ist, mit einer gewichteten Summe über die Partikelklassifizierungen der Partikel, die die Gitterzelle besetzen;
   Erhalten (207) neuer Sensordaten;
   Aktualisieren (208) der vorhergesagten semantischen Informationen, die den Gitterzellen zugewiesen sind, und der semantischen Informationen, die den Partikeln zugewiesen sind, aus den neuen Sensordaten;
   Ableiten (211) einer automatisierten Fahraktion basierend auf den aktualisierten semantischen Informationen und eines neuen dynamischen Zustands der Gitterzellen.

2. Verfahren nach Anspruch 1, wobei die Aktualisierung mittels Bayes' scher Inferenz durchgeführt wird.

3. Verfahren nach Anspruch 1 oder 2, das ferner die folgenden Schritte umfasst:
   Neuabtasten des dynamischen Belegungsgittermodells und Erzeugen neuer Partikel.

4. Verfahren nach einem der vorstehenden Ansprüche, wobei die semantischen Informationen, die den Gitterzellen zugewiesen werden, durch Speichern einer Belegtzellenklassifizierung und einer Freizellenklassifizierung für jede Gitterzelle zugewiesen werden.

5. Verfahren nach einem der Ansprüche 1 bis 4, wobei die Belegtzellenklassifizierung bedingte Wahrscheinlichkeiten umfasst, die jeweils eine Wahrscheinlichkeit einer Kategorie beschreiben, die mit der Gitterzelle verknüpft ist, vorausgesetzt, dass die Gitterzelle belegt ist, und die Freizellenklassifizierung bedingte Wahrscheinlichkeiten umfasst, die jeweils eine Wahrscheinlichkeit einer Kategorie beschreiben, die mit der Gitterzelle verknüpft ist, vorausgesetzt, dass die Gitterzelle Freiraum ist.

6. Verfahren nach einem der Ansprüche 1 bis 5, wobei die automatisierte Fahraktion mindestens eine von einer Lenkaktion, einer Spurwechselaktion, einer Verzögerungsaktion und/oder einer Beschleunigungsaktion umfasst.

7. System zur Unterstützung des Betriebs eines Fahrzeugs, umfassend:

mindestens einen Sensor, der eine Umgebung des Fahrzeugs erfasst und dadurch Sensordaten erhält; ein Steuersystem, das einen oder mehrere Prozessoren umfasst, die operativ mit dem Sensor verbunden sind, wobei der eine oder die mehreren Prozessoren so konfiguriert sind, dass sie die folgenden Schritte ausführen, umfassend:

Ableiten (202) von räumlichen Informationen über die Umgebung und semantischen Informationen aus den Sensordaten;

Erzeugen (203) eines dynamischen Belegungsgittermodells, in dem die erfasste Umgebung als ein Gitter dargestellt wird, das aus einer Mehrzahl von Gitterzellen besteht, wobei die Gitterzellen Belegungsinformationen und einen dynamischen Zustand umfassen, der durch eine Menge von Partikeln dargestellt wird;

Zuweisen (204) semantischer Informationen, die aus den Sensordaten abgeleitet wurden, zu den Gitterzellen und den Partikeln, wobei die semantischen Informationen durch eine Menge von Kategorien dargestellt werden, wobei die Kategorien Freiraumkategorien und Belegtkategorien sowie bewegliche Objektkategorien als eine Teilmenge der Belegt-Kategorien umfassen, wobei die semantischen Informationen den Partikeln zugewiesen werden, indem für jedes Partikel eine Partikelklassifizierung gespeichert wird, die bedingte Wahrscheinlichkeiten umfasst, wobei jede bedingte Wahrscheinlichkeit eine Wahrscheinlichkeit einer mit dem Partikel verknüpften Kategorie beschreibt, vorausgesetzt, dass das Partikel zu den bewegliche Objektkategorien gehört;

Vorhersagen (205) neuer Partikelpositionen auf dem Gitter;

Bestimmen (206) der vorhergesagten semantischen Informationen für die Gitterzellen basierend auf einem Kombinieren der den Gitterzellen zugewiesenen semantischen Informationen mit den den Partikeln zugewiesenen semantischen Informationen basierend auf ihren vorhergesagten neuen Partikelpositionen, wobei das Bestimmen der vorhergesagten semantischen Informationen für jede von Partikeln besetzte Gitterzelle das Berechnen einer vorhergesagten Belegtzellenklassifizierung der Gitterzelle umfasst, wobei die Berechnung eine Summe einer entsprechenden Belegtzellenklassifizierung der Gitterzelle umfasst, wobei die Belegtzellenklassifizierung bedingte Wahrscheinlichkeiten umfasst, die jeweils eine Wahrscheinlichkeit einer mit der Gitterzelle verknüpften Kategorie beschreiben, vorausgesetzt, dass die Gitterzelle besetzt ist, mit einer gewichteten Summe über die Partikelklassifizierungen der Partikel, die die Gitterzelle besetzen;

Erhalten (207) neuer Sensordaten;

Aktualisieren (208) der vorhergesagten semantischen Informationen, die den Gitterzellen zugewiesen sind, und der semantischen Informationen, die den Partikeln zugewiesen sind, aus den neuen Sensordaten;

Ableiten (211) einer automatisierten Fahraktion basierend auf den aktualisierten vorhergesagten semantischen Informationen und eines neuen dynamischen Zustands der einen oder mehreren Gitterzellen.

8. Ein Fahrzeug umfassend das System nach Anspruch 7.

9. Nichtflüchtiges, computerlesbares Medium, das Befehle speichert, die, wenn sie von einem oder mehreren Prozessoren eines Steuerungssystems eines Fahrzeugs ausgeführt werden, den einen oder die mehreren Prozessoren veranlassen, die Schritte gemäß Anspruch 1 auszuführen.

10. Nichtflüchtiges, computerlesbares Medium nach Anspruch 9, wobei die automatisierte Fahraktion mindestens eine von einer Lenkaktion, einer Spurwechselaktion, einer Verzögerungsaktion und/oder einer Beschleunigungsaktion umfasst.

**Revendications**

1. Un procédé mis en œuvre par ordinateur pour assister la conduite d'un véhicule, le procédé comprenant les étapes suivantes :

au moyen d'au moins un capteur, le fait (201) de détecter l'environnement du véhicule afin d'obtenir des données de capteur ;

le fait (202) de déduire des informations spatiales de l'environnement et des informations sémantiques à partir des données du capteur ;

le fait (203) de générer un modèle de grille d'occupation dynamique dans lequel l'environnement détecté est représenté sous la forme d'une grille composée d'une pluralité de cellules de grille, les cellules de grille comprenant des informations d'occupation et un état dynamique représenté par un ensemble de particules ;

le fait (204) d'attribuer aux cellules de grille et aux particules des informations sémantiques déduites des données de capteur, les informations sémantiques étant représentées par un ensemble de catégories, les catégories comprenant des catégories d'espace libre et des catégories d'occupation ainsi que des catégories d'objets en mouvement en tant que sous-ensemble des catégories d'occupation, les informations sémantiques étant attribuées aux particules en stockant, pour chaque particule, une classification de particule comprenant des probabilités conditionnelles, chaque probabilité conditionnelle décrivant une probabilité qu'une catégorie soit liée à la particule étant donné que la particule appartient aux catégories d'objets en mouvement ;

le fait (205) de prédire de nouvelles positions de particules sur la grille ;

le fait (206) de déterminer, pour les cellules de la grille, des informations sémantiques prédites sur la base de la combinaison des informations sémantiques attribuées aux cellules de la grille avec les informations sémantiques attribuées aux particules sur la base de leurs nouvelles positions, prédites, de particules, la détermination des informations sémantiques prédites comprenant pour chaque cellule de la grille occupée par des particules, le fait de calculer une classification prédite de cellule occupée de la cellule de la grille, le calcul comprenant une somme d'une classification correspondante de cellule occupée de la cellule de la grille, la classification de cellule occupée comprenant des probabilités conditionnelles, chacune décrivant une probabilité qu'une catégorie soit liée à la cellule de la grille étant donné que la cellule de la grille est occupée, avec une somme pondérée sur les classifications des particules occupant la cellule de la grille ;

le fait (207) d'obtenir de nouvelles données de capteur ;

le fait (208) de mettre à jour les informations sémantiques prédites attribuées aux cellules de la grille et des informations sémantiques attribuées aux particules à partir des nouvelles données de capteur ;

le fait (211) de déduire une action de conduite automatisée sur la base des informations sémantiques mises à jour et d'un nouvel état dynamique des cellules de la grille.

2. Le procédé selon la revendication 1, dans lequel la mise à jour est effectuée via une inférence bayésienne.

3. Le procédé selon l'une des revendications 1 ou 2, comprenant en outre les étapes consistant à :

rééchantillonner le modèle de grille d'occupation dynamique ; et
générer de nouvelles particules.

4. Le procédé selon l'une quelconque des revendications précédentes, dans lequel les informations sémantiques attribuées aux cellules de la grille sont attribuées en stockant une classification de cellule occupée et une classification de cellule libre pour chaque cellule de la grille.

5. Le procédé selon l'une des revendications 1 à 4, dans lequel la classification de cellule occupée comprend des probabilités conditionnelles, chacune décrivant une probabilité qu'une catégorie soit liée à la cellule de la grille étant donné que la cellule de la grille est occupée, et la classification de cellule libre comprend des probabilités conditionnelles, chacune décrivant une probabilité qu'une catégorie soit liée à la cellule de la grille étant donné que la cellule de la grille est un espace libre.

6. Le procédé selon l'une quelconque des revendications 1 à 5, dans lequel l'action de conduite automatisée comprend au moins une action de direction, une action de changement de voie, une action de décélération et/ou une action d'accélération.

7. Un système d'aide à la conduite d'un véhicule, comprenant :

au moins un capteur détectant un environnement du véhicule afin d'obtenir des données de capteur ;
un système de commande comprenant un ou plusieurs processeurs connectés de manière opérationnelle au capteur, lesdits un ou plusieurs processeurs étant configurés pour mettre en œuvre les étapes comprenant :

le fait (202) de déduire des informations spatiales de l'environnement et des informations sémantiques à partir des données de capteur ;

le fait (203) de générer un modèle de grille d'occupation dynamique dans lequel l'environnement détecté est représenté sous la forme d'une grille composée d'une pluralité de cellules de grille, les cellules de grille comprenant des informations d'occupation et un état dynamique représenté par un ensemble de particules ;

le fait (204) d'attribuer aux cellules de la grille et aux informations sémantiques de particules déduites des données du capteur, les informations sémantiques étant représentées par un ensemble de catégories, les catégories comprenant des catégories d'espace libre et des catégories occupées ainsi que des catégories d'objets en mouvement en tant que sous-ensemble des catégories occupées, les informations sémantiques étant attribuées aux particules en stockant pour chaque particule une classification de particules comprenant des probabilités conditionnelles, chaque probabilité conditionnelle décrivant une probabilité qu'une catégorie soit liée à la particule étant donné que la particule appartient aux catégories d'objets en mouvement ;

le fait (205) de prédire de nouvelles positions de particules sur la grille ;

le fait (206) de déterminer, pour les cellules de la grille, des informations sémantiques prédites sur la base de la combinaison des informations sémantiques attribuées aux cellules de la grille avec les informations sémantiques attribuées aux particules sur la base de leurs nouvelles positions, prédites, de grille, la détermination des informations sémantiques prédites comprenant pour chaque cellule de la grille occupée par des particules, le calcul d'une classification prédite de cellule occupée de la cellule de la grille, le calcul comprenant une somme d'une classification correspondante de cellule occupée de la cellule de la grille, la classification de cellule occupée comprenant des probabilités conditionnelles, chacune décrivant une probabilité qu'une catégorie soit liée à la cellule de la grille étant donné que la cellule de la grille est occupée, avec une somme pondérée sur les classifications des particules occupant la cellule de la grille ;

le fait (207) d'obtenir de nouvelles données de capteur ;

le fait (208) de mettre à jour des informations sémantiques prédites attribuées aux cellules de la grille et des informations sémantiques attribuées aux particules à partir des nouvelles données de capteur ;

le fait (211) de déduire une action de conduite automatisée sur la base des informations sémantiques prédites mises à jour et d'un nouvel état dynamique de la ou des cellules de la grille.

8. Un véhicule comprenant le système selon la revendication 7.

9. Un support informatique non transitoire, lisible par ordinateur, stockant des instructions qui, lorsqu'elles sont exécutées par un ou plusieurs processeurs d'un système de commande d'un véhicule, amènent lesdits un ou plusieurs processeurs à mettre en œuvre les étapes selon la revendication 1.

10. Le support informatique non transitoire, lisible par ordinateur, selon la revendication 9, dans lequel l'action de conduite automatisée comprend au moins une action parmi une action de direction, une action de changement de voie, une action de décélération et/ou une action d'accélération.

100

101 Prediction & Mixing

102 Update from sensor measurements

103 Particle update & creation

Figure 1

300

301

310

311

320

321

322

Figure 3

403

402

401

404 405 406

Figure 4a

407 408 409

Figure 4b

410
411

412 413 414

Figure 4c

200

```
                          ┌────────────────────────────────┐
                          │      Sensing the environment      │─── 201
                          └────────────────────────────────┘
                                          │
                                          ▼
                          ┌────────────────────────────────┐
                          │  Deriving  spatial information  of the  │
                          │ environment  and semantic information  from │─── 202
                          │           the sensor data          │
                          └────────────────────────────────┘
                                          │
                                          ▼
                          ┌────────────────────────────────┐
                          │  Generating  a dynamic occupancy  grid │─── 203
                          │               model              │
                          └────────────────────────────────┘
                                          │
                                          ▼
                          ┌────────────────────────────────┐
                          │ Assigning each grid cell of the one or more │
                          │  grid cells and each particle semantic │─── 204
                          │             information            │
                          └────────────────────────────────┘
                                          │
                                          ▼
                          ┌────────────────────────────────┐
                          │ Predicting a new position on the grid of │─── 205
                          │            every  particle         │
                          └────────────────────────────────┘
                                          │
                                          ▼
                          ┌────────────────────────────────┐
                          │ Determining for each grid cell predicted │
                          │ semantic information  based on combining │
                          │  the semantic information  previously  │─── 206
                          │ assigned to the grid cells with the semantic │
                          │ information  previously  assigned to the │
                          │               particles            │
                          └────────────────────────────────┘
                                          │
                                          ▼
                          ┌────────────────────────────────┐
                          │ Obtaining new semantic sensor data from │─── 207
                          │  new semantic sensor measurements   │
                          └────────────────────────────────┘
                                          │
                                          ▼
                          ┌────────────────────────────────┐
                          │  Updating the predicted occupying cell │
                          │     classification and predicted free-cell │─── 208
                          │   classification based on the mew semantic │
                          │             sensor data           │
                          └────────────────────────────────┘
                                          │
                                          ▼
                          ┌────────────────────────────────┐
                          │ Updating the particle classifications based │─── 209
                          │     on the new semantic sensor data  │
                          └────────────────────────────────┘
                                          │
                                          ▼
                          ┌────────────────────────────────┐
                          │        Generating  new particles      │─── 210
                          └────────────────────────────────┘
                                          │
                                          ▼
                          ┌────────────────────────────────┐
                          │ Deriving an automated driving  action based │
                          │ on the predicted semantic information  and │─── 211
                          │  the new dynamic state of the grid cells │
                          └────────────────────────────────┘
                                          │
                                          ▼
                          ┌────────────────────────────────┐
                          │ Operating the self-driving  vehicle according │─── 212
                          │  to the derived  automated driving action. │
                          └────────────────────────────────┘
```

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013223803 A1

- US 2021334556 A1

**Non-patent literature cited in the description**

- **D. NUSS** ; **M. THOM** ; **A. DANZER** ; **K. DIETMAYER**. Fusion of laser and monocular camera data in object grid maps for vehicle environment perception. *17th International Conference on Information Fusion (FUSION)*, 2014, 1-8
- From Particles to Self-Localizing Tracklets: A Multilayer Particle Filter-Based Estimation for Dynamic Grid Maps. **VATAVU ANDREI et al.** IEEE INTELLIGENT TRANSPORTATION SYSTEMS MAGAZINE. IEEE, 01 January 2020, vol. 12

- PartID - Individual Objects Tracking in Occupancy Grids Using Particle Identities. **DANESCU RADU et al.** IEEE 16TH INTERNATIONAL CONFERENCE ON INTELLIGENT COMPUTER COMMUNICATION AND PROCESSING (ICCP). IEEE, 03 September 2020, 283-290